# EUROPEAN PATENT APPLICATION

(11) **EP 0 981 957 A1**
(43) Date of publication of application: **01.03.2000**
(21) Application number: 99306324.7
(22) Date of filing: 10.08.1999
(51) Int. Cl.: A01N 25/24, A01N 53/00

(54) **Method for the enhancement of the residual activity of pesticide formulations**

(30) Priority: 11.08.1998 US 131952
(71) Applicant: American Cyanamid Company, Madison, New Jersey 07940-0874 (US)
(72) Inventor: Leonard, Paul Keith, 1325 Corroy-Le-Grand (BE)
(74) Representative: Mannion, Sally Kim, Dr.

(57) **Abstract**

The present invention relates to the preparation of novel solid pesticide formulations which, after application, provide a dry, coherent deposit of the pesticidal agent on the target, resulting in increased residual activity and greater efficacy when applied to various agricultural products, especially food crops. This enhanced residual activity results from formulation of the pesticidal agent with 10-75% by weight of a polyvinylpyrrolidone polymer or copolymer and application of the formulation to the target.

## Description

### FIELD OF THE INVENTION

The present invention relate to the preparation of novel solid pesticide formulations which, after application, provide a dry, coherent deposit of the pesticide agent on the target, resulting in an increased residual activity and greater efficacy when applied to various agricultural products, especially food crops.

### BACKGROUND OF THE INVENTION

The present invention relates generally to the formulation of various pesticidal agents to enhance the residual activity and increase the bioavailability thereof, and methods of use therefor, in both plants and animals, and on solid surfaces.

Crop protection and veterinary pesticidal agents are typically formulated in solid or liquid compositions, usually in the form of a concentrate for ease of handling and transportation, and then diluted with water by the user before application. Typically, a surface active agent is utilized in the formulation to facilitate dilution and is incorporated into the formulation. Frequently, these compositions also involve the use of organic solvents either in the product itself or in the preparation thereof.

Polyvinylpyrrolidone (PVP) has previously been utilized in formulations of pesticides, typically to provide solid formulations which avoid the use of organic solvents, and which have a greater dispersability in water, see, for instance, U.S. Patents 5,324,745, 5,665,369, 5,711,956, and PCT Application WO 94/23579. PVP has also been used extensively in the pharmaceutical industry as a binder or carrier for pharmaceutically active ingredients, especially to assist dissolution and use of sparingly soluble active materials. When used as the base matrix for solid solutions, the conventional preparation method is by solvent evaporation: the active ingredient and PVP are dissolved together in a suitable organic solvent and then the solvent is evaporated off the solid in an amorphous form. The drying stage and the solvent recovery (to avoid contamination of the environment) are difficult and expensive processing steps.

Frequent reapplication of pesticidal agents is often necessary to control the target pests. Unfortunately, such applications results in undesirable pesticide residues which can adversely impact non-target species in the environment. Standard procedure to avoid such impact usually involves a waiting period before reapplication of the pesticide. Often, this results in re-infestation by the pest, with concomitant damage to the crops or animals under treatment.

There is a need in the art for pesticidal formulations which can provide a longer duration of residual pesticidal activity and enhanced bioavailability of the pesticidal agent, and thus avoid the environmental damage or re-infestation problems encountered with present formulations. It is to these aims that the present invention is directed.

The citation of references herein shall not be construed as an admission that such is prior art to the present invention.

### SUMMARY OF THE INVENTION

The present invention is directed to a method of forming a coherent, solid deposit of a pesticidal agent, thereby increasing the residual activity and the bioavailability of the pesticidal agent, which comprises
(a) formulating the agent into a flowable, dry composition which comprises 10-75% by weight of a polyvinylpyrrolidone;
(b) mixing the flowable, dry composition with a suitable solvent for application to a target; and
(c) applying the formulation to the target, whereby a coherent, solid deposit of the pesticidal agent is formed upon the target.

It is thus a primary object of the invention to provide a method for increasing the residual activity of formulations of pesticides, especially contact insecticides, by utilizing a solid formulation which comprises 10-75% by weight of a polyvinylpyrrolidone polymer which, after application, provides a coherent, solid deposit of the pesticidal agent.

A further object of the invention is to provide a method for increasing the bioavailability of a pesticidal agent from a formulation to the target pest, by utilizing a formulation which comprises 10-75 % by weight of a polyvinylpyrrolidone polymer and which, after application, provides a coherent, solid deposit of the pesticidal agent on the target.

Yet a further object of the invention is to provide a method of controlling pests, particularly insect pests, which comprises utilization of the aforesaid methods and formulations.

These and other objects of the invention will be better understood by reference to the following drawings, detailed description of the invention, and the Examples.

### BRIEF DESCRIPTION OF THE DRAWINGS

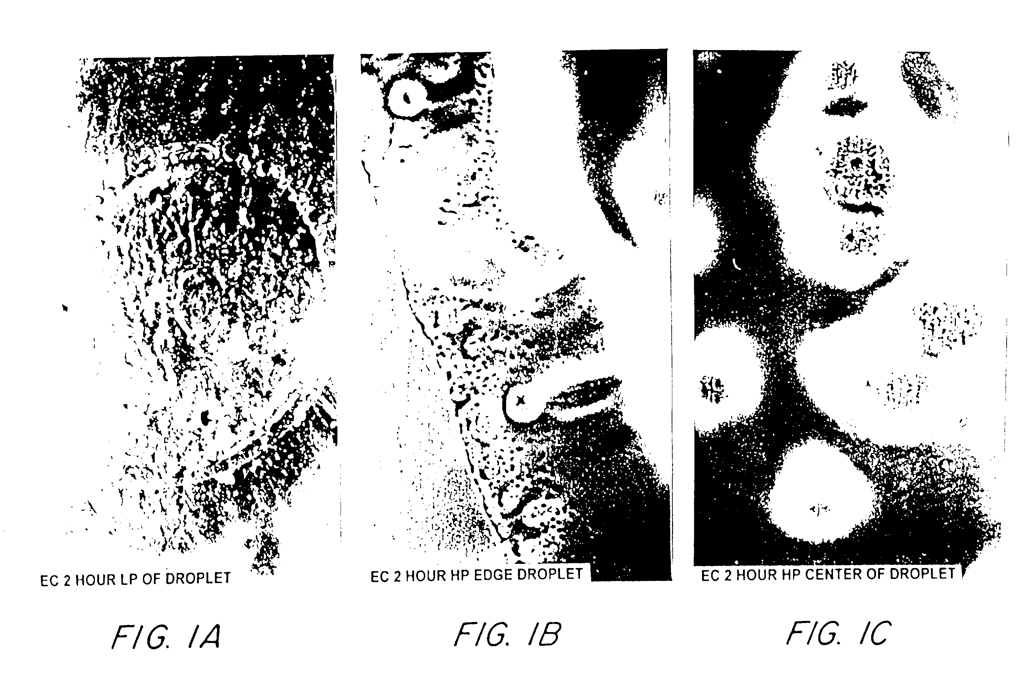

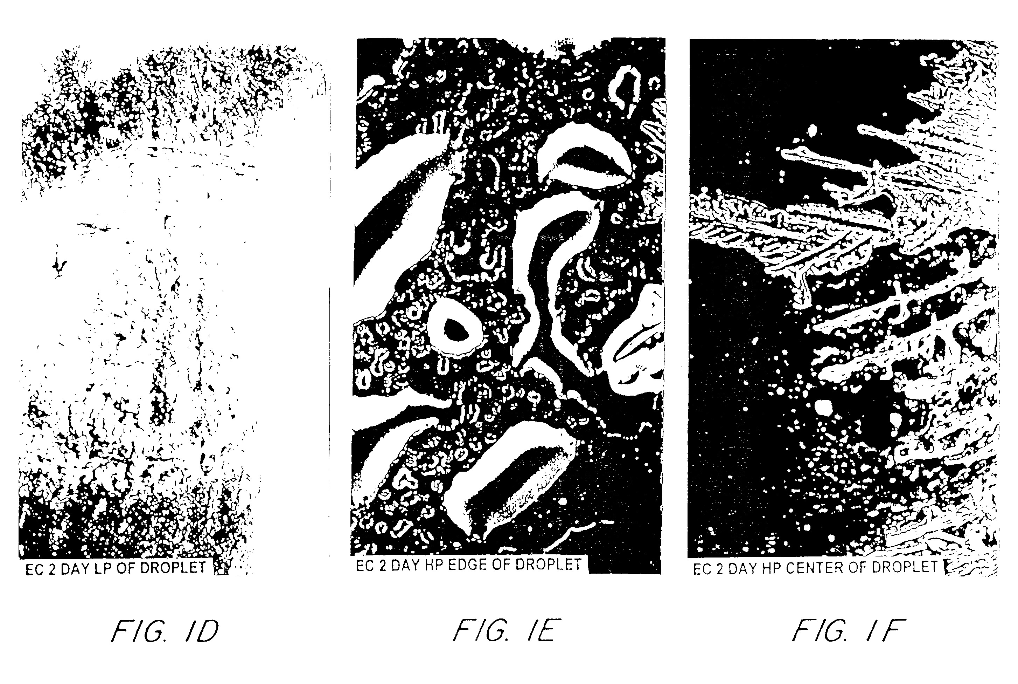

FIGURES 1a-f are photomicrographs of an α-cypermethrin EC droplet 2 hours and 2 days after application to a glass surface. FIGURE 1a is a 2 hour LP (10x magnification) of droplet. FIGURE 1b is a 2 hour HP (40x magnification) edge of droplet. FIGURE 1c is 2 hour HP (40x magnification) center of droplet. FIGURE 1d is 2 day LP (10x magnification) of droplet. FIGURE 1e is 2 day HP (40x magnification) edge of droplet. FIGURE 1f is 2 day HP (40x magnification) center of droplet.

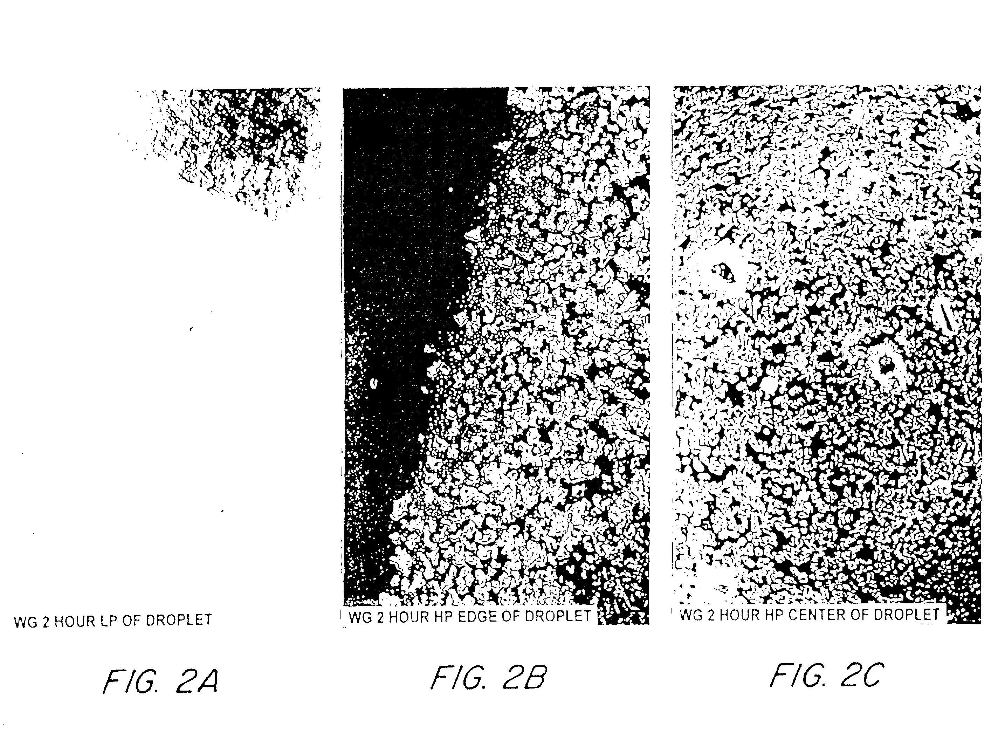

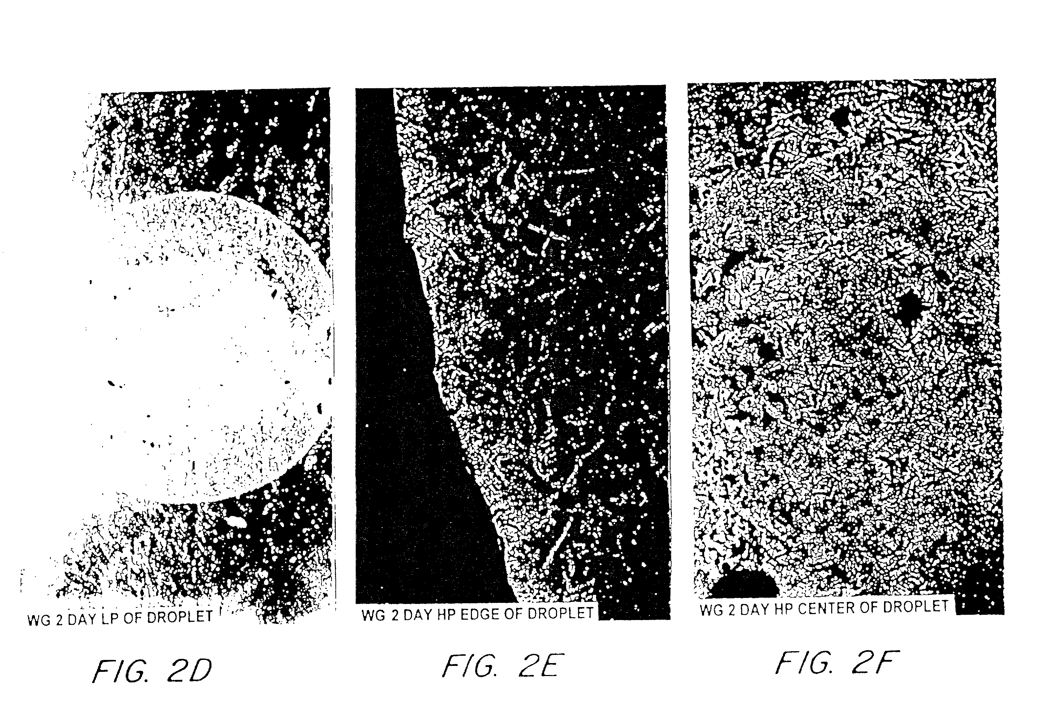

FIGURES 2a-f are photomicrographs of an α-cypermethrin WG droplet 2 hours and 2 days after application to a glass surface. FIGURE 2a is a 2 hour LP (10x magnification) of droplet. FIGURE 2b is a 2 hour HP (40x magnification) edge of droplet. FIGURE 2c is 2 hour HP (40x magnification) center of droplet. FIGURE 2d is 2 day LP (10x magnification) of droplet. FIGURE 2e is 2 day HP (40x magnification) edge of droplet. FIGURE 2f is 2 day HP (40x magnification) center of droplet.

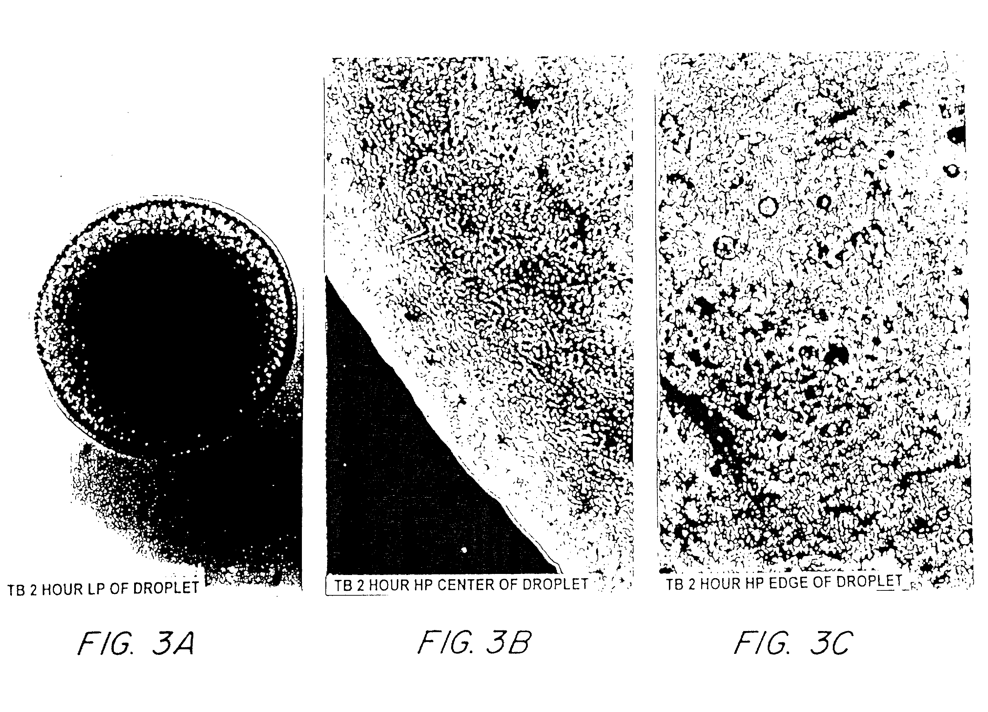

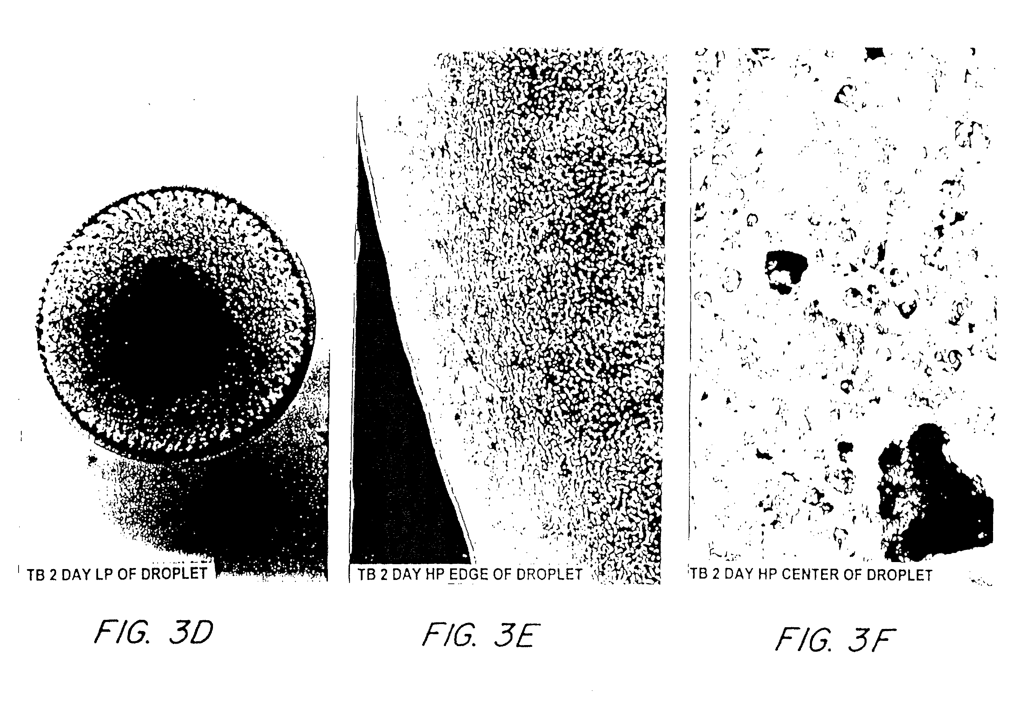

FIGURES 3a-f are photomicrographs of an α-cypermethrin TB droplet 2 hours and 2 days after application to a glass surface. FIGURE 3a is a 2 hour LP (10x magnification) of droplet. FIGURE 3b is a 2 hour HP (40x magnification) edge of droplet. FIGURE 3c is 2 hour HP (40x magnification) center of droplet. FIGURE 3d is 2 day LP (10x magnification) of droplet. FIGURE 3e is 2 day HP (40x magnification) edge of droplet. FIGURE 3f is 2 day HP (40x magnification) center of droplet.

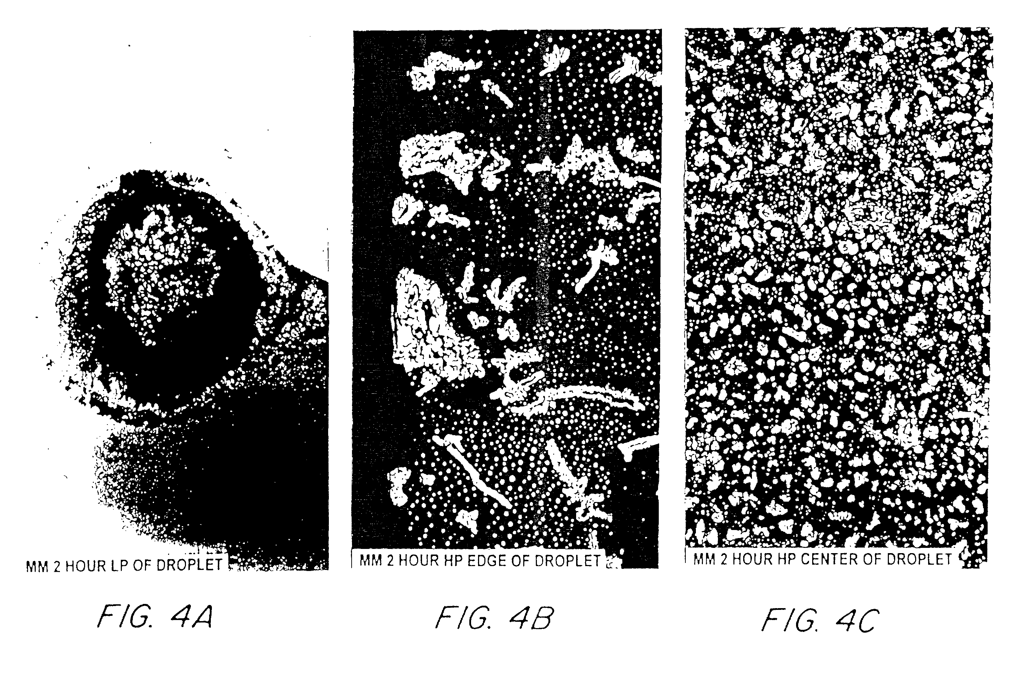

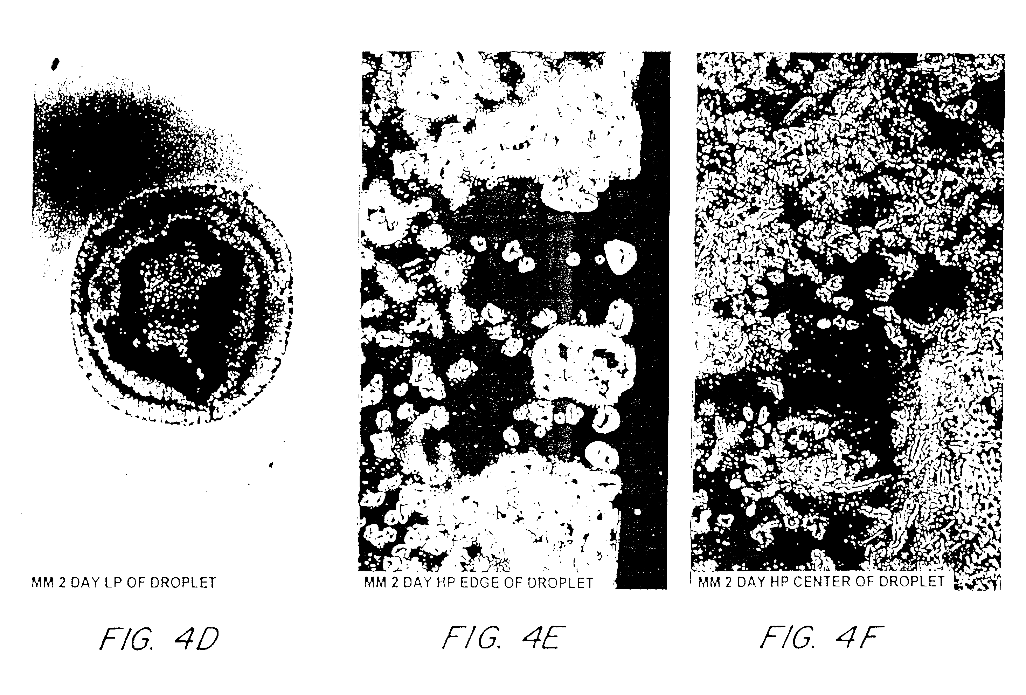

FIGURES 4a-f are photomicrographs of an α-cypermethrin MM droplet 2 hours and 2 days after application to a glass surface. FIGURE 4a is a 2 hour LP (10x magnification) of droplet. FIGURE 4b is a 2 hour HP (40x magnification) edge of droplet. FIGURE 4c is 2 hour HP (40x magnification) center of droplet. FIGURE 4d is 2 day LP (10x magnification) of droplet. FIGURE 4e is 2 day HP (40x magnification) edge of droplet. FIGURE 4f is day HP (40x magnification) center of droplet.

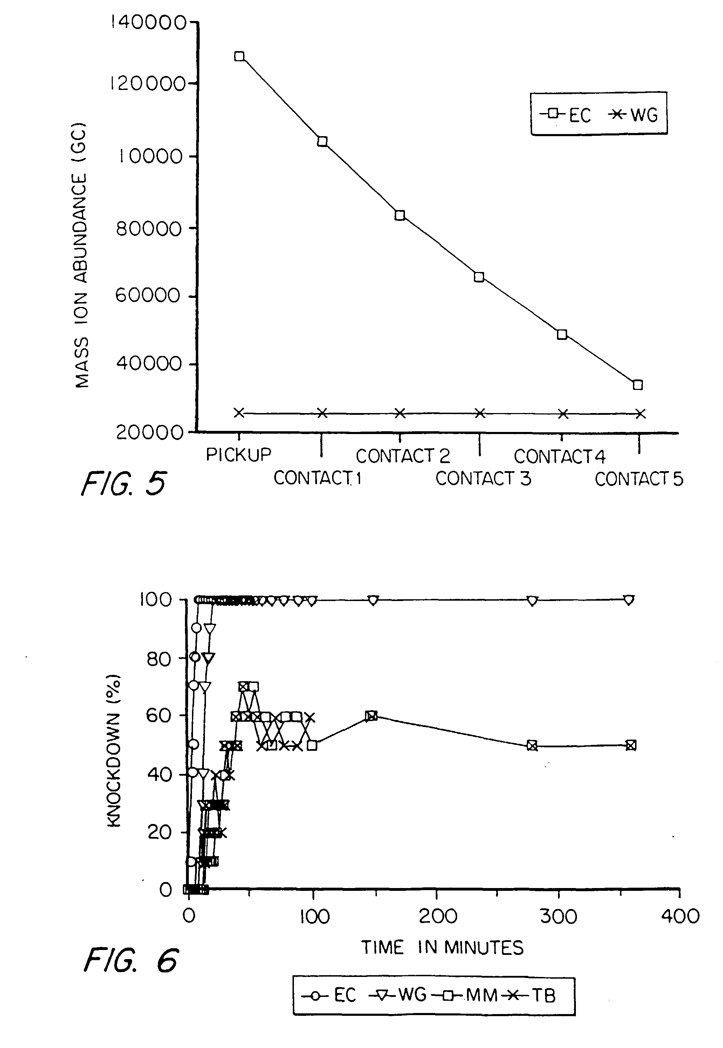

FIGURE 5 is a graph showing the quantities (mass ion abundance ) of α-cypermethrin picked up and redeposited following contact of mustard beetles with dried deposits of the EC and WG formulations.

FIGURE 6 is a graph showing the response (% knockdown) of mustard beetles following contact with 2 hour aged droplets of -various α-cypermethrin formulations.

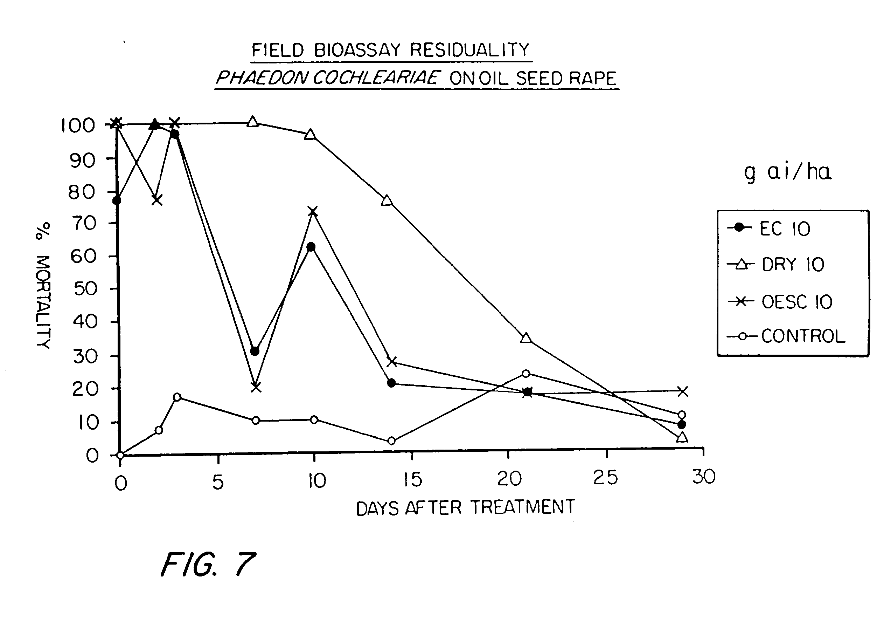

FIGURE 7 is a graph showing the comparison of the residual performance of FASTAC DRY α-cypermethrin and FASTAC α-cypermethrin EC and OESC formulations applied to oil seed rape for the control of adult mustard beetles, *Phaedon cochleariae* Fab on oil seed rape.

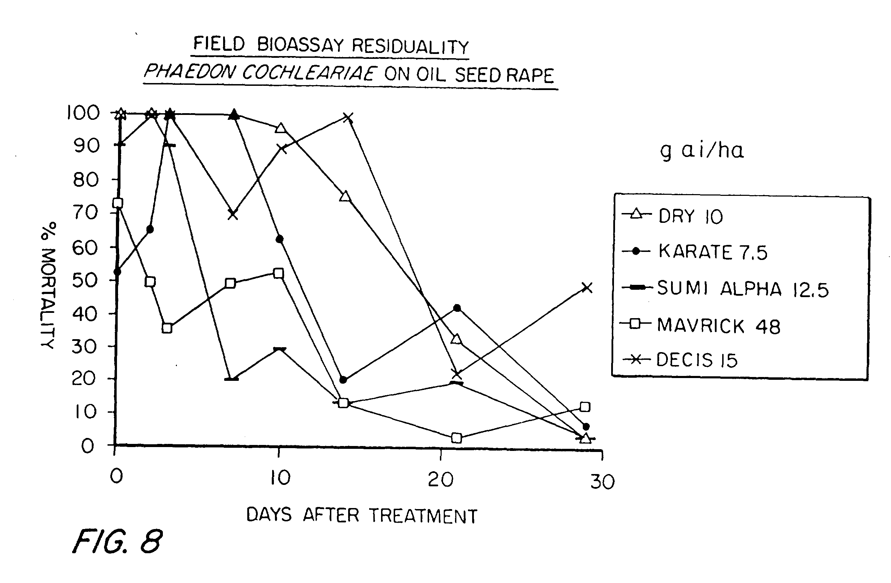

FIGURE 8 is a graph showing the comparison of the residual performance of FASTAC DRY α-cypermethrin, MAVRICK t-fluvalinate EC, SUMI ALPHA esfenvalerate EC, KARATE lambda-cyhalothrin EC and DECIS deltamethrin EC applied to oil seed rape for the control of adult mustard beetles, *Phaedon cochleariae* Fab on oil seed rape.

### DETAILED DESCRIPTION OF THE INVENTION

The present invention relates to methods of forming a coherent, solid deposit of a pesticidal agent upon a target which comprise formulating the agent into a flowable, dry composition which comprises 10-75% by weight of a polyvinylpyrrolidone polymer or copolymer; mixing said composition with a suitable solvent for application to a target; and applying the formulation to the target, whereby a coherent, solid deposit of the pesticidal agent is formed upon the target, thereby increasing the residual activity and the bioavailability of the pesticidal agent.

Polyvinylpyrrolidone polymers and copolymers are well known commercial products available in various forms from, for example, the companies BASF and ISP. The water-soluble polymer and its preparation is described in, *inter alia,* The Merck Index, 11^{th} edition, Monograph 7700. Suitable polyvinylpyrrolidone polymers and co-polymers thereof for use in the present invention are any of the available forms. Preferably, they have a Fikentscher K value, see U. S. Patent No. 2,706,701, in the range of from 10 to 100, reflecting a molecular weight of from 5,000 to 700,000. In a preferred embodiment of the present invention, the polyvinylpyrrolidone polymer or copolymer has a K value of 20 to 40, especially 25 to 35, and an average molecular weight in the range of from 10,000 to 400,000. The polyvinylpyrrolidone polymer is desirably a homopolymer of vinylpyrrolidone monomers, but may also be a copolymer provided that at least 50% or more of the polymer units are vinylpyrrolidone monomers. A particularly preferred copolymer is the alkylated vinylpyrrolidone copolymer sold under the tradename AGRIMER AL 10.

The quantity of polyvinylpyrrolidone polymer or copolymer in the dry, flowable formulation utilized in the present invention ranges from about 10 to about 75% by weight of the dry formulation. Preferably, the amount is from about 20 to about 50% by weight.

The methods of the present invention are applicable to the application of any solid formulation of a pesticidal agent and mixtures thereof. Typical pesticidal agents which can be formulated for use in the methods of the present invention include pyrroles, such as chlorfenapyr, benzoylureas, such as flufenoxuron or teflubenzuron, or pyrethroids, such as permethrin, cypermethrin or α-cypermethrin, and isofluoroene. Other insecticidal agents which can be utilized are those disclosed in U.S. Patent 5,310,938 (American Cyanamid), European Patent 161,019 (American Cyanamid), U.S. Patent 4530716 (Ciba-Geigy), U.S. Patent 3835176 (Sumitomo), U.K. Patent 1 413 491 (NRDC), U.K. Patent 1168797 (NRDC), U.S. Patent 4405640 (Zeneca), European Patent Application No. 107296 (ICI), U.K. Patent Application No. 1 565 932 (Bayer), U.K. Patent Application No. 1 439 615 (Sumitomo), U.K. Patent Application No. 1 560 303 (Sumitomo), U.K. Patent Application No. 2 013 206 (Sumitomo), and U.K. Patent Application No. 2 064 528 (Shell).

Examples of commercial pyrethroid insecticides for use in the present invention include: 5-benzyl-3-furylmethyl(E)-(1R)cis-2 ,2-dimethyl-3-(2-oxothiolan-3-ylidenemethyl )cyclopropanecarboxylate; permethrin (3 -phenoxybenzyl (1RS)-cis-trans-3- (2,2-dichlorovinyl)-2,2-dimethylcyclopropanecarboxylate); fenpropathrin ((RS)-α-cyano-3-phenoxybenzyl 2,2,3,3-tetramethylcyclopropanecarboxylate) ; esfenvalerate ((S)-α-cyano-3-phenoxybenzyl(S)-2(4-chlorophenyl)-3-methylbutyrate); fenvalerate ((RS)cyano-3-phenoxybenzyl(RS)-2-(4-chlorophenyl)-3-methylbutyrate); cyfluthrin ((RS)-α-cyano-4-fluoro-3-phenoxybenzyl(1RS)-cis-trans-3-(2,2-dichlorovinyl)-2,2-dimethylcyclopropanecarboxylate); beta-cyfluthrin (a reaction mixture comprising two enantiomeric pairs in approximate ratio 1:2, i.e. (S-α-cyano-4-fluoro-3-phenoxybenzyl(1R)-cis-3-(2,2-dichlorovinyl)-2,2-dimethylcyclopropanecarboxylate and (R)-a-cyano-4-fluoro-3-phenoxybenzyl(1S)-cis-3-(2,2-dichlorovinyl)-2,2-dimethylcyclopropanecarboxylate with (S)-α-cyano-4-fluoro-3-phenoxybenzyl (1R)-trans-3-(2,2-dichlorovinyl))-2,2-dimethylcyclopropanecarboxylate and (R)-a-cyano-4-fluoro-3-phenoxybenzyl(1S)-trans-3-(2,2-dichlorovinyl)-2,2-dimethylcyclopropanecarboxylate); lambda-cyhalothrin (a reaction product comprising equal quantities of (S)-a-cyano-3-phenoxybenzyl(Z)-(1R)-cis-3-(2-chloro-3,3,3-trifluoropropenyl)-2,2-dimethylcyclopropanecarboxylate and (R)-a-cyano-3-phenoxybenzyl(Z)-(1S)cis-3-(2-chloro-3,3,3-trifluoropropenyl)-2,2-dimethylcyclopropanecarboxylate); cyhalothrin((RS)-a-cyano-3-phenoxybenzyl(Z)-(1RS)-cis-3-(2-chloro-3,3,3-trifluoropropenyl)-2,2-dimethylcyclopropanecarboxylate); deltamethrin ((S)-a-cyano-3-phenoxybenzyl(1R)-cis-3-(2,2-dibromovinyl)-2,2-dimethylcyclopropanecarboxylate); cypermethrin ((RS)-a-cyano-3-phenoxybenzyl(1RS)-cis-trans-3-(2,2-dichlorovinyl)-1,1-dimethylcyclopropanecarboxylate); zeta-cypermethrin (a mixture of the stereoisomers (S)-α-cyano-3-phenoxybenzyl (1RS, 3RS;1RS, 3SR)-3-(2,2 dichlorovinyl)-2,2-dimethylcyclopropanecarboxylate where the ratio of the (S); (1RS,3RS) isomeric pair to the (S);(1RS,3SR) isomeric pair lies in the ratio range 45-55 to 55-45 respectively); deltamethrin ((S)-α-cyano-3-phenoxybenzyl (1R,3R)-3-(2,2-dibromovinyl)-2,2-dimethylcyclopropanecarboxylate); tau-fluvalinate (RS)-α-cyano-3-phenoxybenzyl *N*-(2-chloro-α,α,α-trifluoro-*p*-tolyl)-D-valinate); and alphacypermethrin (a racemate comprising (S)-a-cyano-3-phenoxybenzyl(1R)-cis-3-(2,2-dichlorovinyl)-2,2- dimethylcyclopropanecarboxylate and (R)-a-cyano-3-phenoxybenzyl(1S)-cis-3-(2,2dichlorovinyl)-2,2-dimethylcyclopropanecarboxylate).

Especially preferred insecticides for use in the present invention are those such as cypermethrin, α-cypermethrin, flufenoxuron, chlorfenapyr, deltamethrin, cyfluthrin and esfenvalerate.

Preferred pyrethroid insecticides are those of the general formula 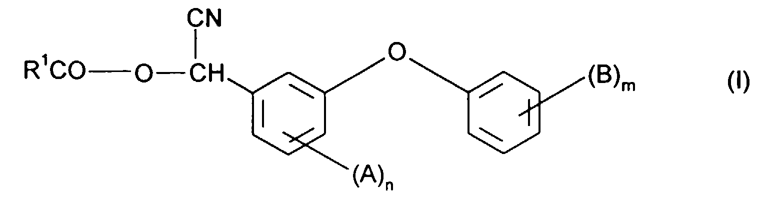 wherein A and B independently represent a halogen atom or a methyl group; n is 1 or 2; m is 0, 1 or 2; and R¹ represents a group of the general formula: 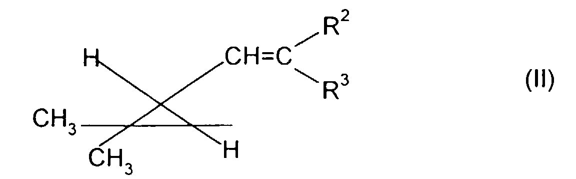 wherein R² and R³ independently represent a hydrogen or halogen atom, or an optionally substituted C₁₋₄ alkyl group or R¹ represents a group of the general formula 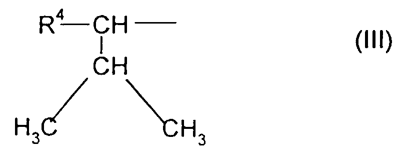 wherein R⁴ represents a phenyl group optionally substituted by one or more substituents independently selected from halogen atoms, or C₁₋₄ alkyl, C₁₋₄alkylthio, C₁₋₄ alkoxy, nitro and methylenedioxy groups.

Of these pyrethroid insecticides, α-cypermethrin is especially preferred.

The dry, flowable compositions for utilization in the methods of the present invention can be prepared by a variety of methods disclosed in the art for the preparation of PVP formulations. Thus, the solid formulation can be prepared by dissolving the polyvinylpyrrolidone polymer or copolymer and at least one pesticide in a solvent, followed by removal of the solvent from the resulting solution to yield a solid formulation. Processes describing this type of preparation are detailed in U. S. Patent 5,711,956, the teachings of which are incorporated by reference.

Another process for the preparation of the polyvinylpyrrolidone polymer or copolymer compositions useful in the present invention involves the coextrusion of the active pesticidal agent with the polyvinylpyrrolidone polymer or copolymer. A homogeneous mixture of the active pesticidal agent and the polyvinylpyrrolidone polymer or copolymer is prepared in a high shear powder blender. The powder mix is gravimetrically fed into a hot-melt extruder, *e.g.,* a APV MP2030 twin screw corotating extruder, 25:1 L/D (length over diameter). The mix is concurrently heated and mixed at a molecular level at a suitable operating extrusion temperature or temperature profile for such a mixture. The molten extrudate is cooled on a stainless steel belt until brittle, crushed to flakes and then milled to the desired particle size. Following milling, the particulate extrudate may be classified or screened to obtain a particle size which is optimal for use as a granular product. Alternatively, the unclassified milled extrudate is combined with other ingredients for subsequent processing, for example, compression, to form tablets using a tabletting machine. Since it is desirable to have a low residual water content in the extruded product, water (present in the PVP feedstock) is drawn off by means of a vacuum pump, during the extrusion process. Processes of this type are described in greater detail in U. S. Patent 5,665,369, the teachings of which are incorporated by reference.

Optionally, but preferably, the composition will include additional excipients to stabilize the formulation, and/or to assist in its dissolution and dispersal in the application solvent. For instance, where α-cypermethrin is utilized as the pesticidal agent, the solid formulation must be rendered slightly acidic to prevent epimerization or inversion of the cis-2-isomers to the cis-1-isomers. Typically, this is accomplished by the inclusion of from 0.5 to 0.9% by weight of an organic acid such as benzoic acid or toluene sulphonic acid, or by the incorporation of a water soluble salt such as potassium hydrogen sulphate or sodium sulphate.

The flowable, dry PVP formulations utilized in the present invention are applied to their target foliage, animal or solid surface by mixing with a conventional solvent, typically and preferably, water, and applying the formulation to the target, typically and preferably by spraying, wetting or dipping the target with the mixture. The result of such application is the solid, coherent deposit of the pesticidal agent upon the target. Typical rates of application are well-established in the art for the particular pesticidal agents, and these rates may be lowered somewhat due to the enhancement of the residuality of the pesticidal agents resultant from the use of a PVP formulation of the agent. Typically, a greater efficacy of the pesticidal agent is observed from the lowest established rate.

While not wishing to be bound by any theory, it is believed that the enhanced effects of the formulations are resultant from the ability of the PVP formulation to affect the deposit of the pesticidal agent upon its target surface, which changes the residuality and bioavailability of the pesticidal agent. Distinct from other formulations which deposit their incorporated pesticide as irregular droplets with poorly crystalline forms of the pesticide, the application of the PVP formulation has been determined to deposit its incorporated pesticidal agent as a solid, coherent deposit with well-defined crystals of the incorporated pesticidal agent. Studies of such deposits confirm that their form contributes to the enhanced residuality and increased bioavailability of the incorporated pesticidal agents.

Various terms are used herein, which have the following meanings :
FASTAC is a trade name for α-cypermethrin which is a racemate comprising (S) α-cyano-3-phenoxybenzyl (1R)-cis-3-(2,2-dichloro-vinyl)-2,2-dimethylcyclopropanecarboxylate and (R) α-cyano-3-phenoxybenzyl (1S)-cis-3-(2,2-dichloro-vinyl)-2,2-dimethylcyclopropanecarboxylate.
DECIS is a trade name for deltamethrin which is (S)-α-cyano-3-phenoxybenzyl(1R)-cis-3-(2,2-dibromovinyl)-2,2-dimethylcyclopropanecarboxylate.
Esfenvalerate is (S)-α-cyano-3-phenoxybenzyl(S)-2(4-chlorophenyl)-3-methylbutyrate.
"WG" means "water dispersible granules", "TB" means "tablet form", "SC" means "suspension concentrate", "MM" means "mastermix", and "EC" means "emulsifiable concentrate".

The present invention will be better understood by reference to the following Examples, which are illustrative of the invention, and are not intended as limiting of the invention.

Naturally the foregoing formulations are illustrative and may vary within the skill of the art, and are presented herein in fulfillment of the duty to present the best mode for the practice of the invention.

### EXAMPLE 1

### Pharmokinetic and Dose Transfer Study

Studies were undertaken to compare the behavior and efficacy of the α-cypermethrin formulations (1 to 5) described below. These investigations were intended to compare novel, dry formulations (WG, MM and TB) with a conventional EC and the technical material and to show how the processes of dose transfer, penetration and distribution are affected by changes in formulations, and how these changes modify the effectiveness of α-cypermethrin as a contact insecticide.

### Formulations:

| (1) FASTAC α-cypermethrin 100 g/l emulsifiable concentrate (EC) | |
|---|---|
| α-cypermethrin | 100g |
| Tensiofix NS anionic/nonionic emulsifier | 40g |
| Tensiofix AS anionic/nonionic emulsifier | 40g |
| aromatic hydrocarbon solvent to | 1.0 liter |

| (2) FASTAC α-cypermethrin polyvinylopyrrolidone 350g/kg water dispersible granules (WG) | |
|---|---|
| α-cypermethrin | 350g |
| sodium xylene sulfonate (anionic surfactant) | 100g |
| polyvinyl pyrrolidone polymer or copolymer to | 1kg |

| (3) FASTAC α-cypermethrin polyvinylopyrrolidone 150g/kg Tablet (TB) RLF | |
|---|---|
| α-cypermethrin | 150g |
| polyvinyl pyrrolidone polymer or copolymer | 223g |
| potassium hydrogen sulfate | 1.8g |
| citric acid, anhydrous | 210g |
| potassium hydrogen carbonate | 290g |
| microcrystalline cellulose | 100g |
| sodium lauryl sulfate | 7g |
| amorphous silica | 6g |
| sorbitol | up to 1kg |

| (4) FASTAC α-cypermethrin polyvinyl pyrrolidone Mastermix (MM) RLF | |
|---|---|
| α-cypermethrin | 400g |
| polyvinyl pyrrolidone polymer or copolymer 150-400 µm cut (lab sieved) | to 1 kg |

| (5) FASTAC α-cypermethrin Technical | |
|---|---|
| α-cypermethrin | 95.3 %m/m |
| volatile hydrocarbon solvent | <0.1 %m/m |
| triethylamine | 0.04%m/m |
| total pyrethroid | 99.7 %m/m |

### Experimental procedures and Results

### Study 1. Droplet aging on glass slides (formulations 1 to 4)

Drops (20µl) of each of the EC, WG, TB and MM formulations (FASTAC α-cypermethrin formulations 1 to 4) were placed on glass microscope slides and left to age for 2 hours and 48 hours. Photomicrographs (200 ASA monochrome) were taken at these elapsed times using a Wild M2O microscope (LP-10x magnification) (HP-40x magnification) each fitted with a 35mm camera.

The deposits on glass slides formed discrete droplets as shown in FIGURES 1-4. Each formulation dried in a different manner. The EC formed an oily deposit, which even after 48 hours showed liquid components and very little crystallization and which dries to form an incoherent residue of concentrated microdroplets (See FIGURES 1d-f). The MM dried quickly to form a pronounced area of crystallization at the center; concentric bands of less ordered material surrounded this central structure. By 2 days, the TB and WG had both formed fairly uniform crystalline deposits with distinct perimeters. However, the TB formed a drier, more dense deposit of smaller crystals.

In both the short and the long term, the formulation type affected the characteristics, particularly the degree of crystallization, of the droplets formed. The fluidity of the EC might be expected to facilitate transfer of material from the deposit to the surface of the walking target insects and subsequent spreading of the material across the insect surface. This would provide a high potential for penetration through the cuticle but re-deposition would also be likely. The TB and WG left more solid deposits which might be picked up less readily by walking insects. However, the droplet should have a longer useful life, since for instance it should be more rainfast, and remain available for transfer to grazing insects by ingestion. The MM had some of the characteristics of both the fluid and crystalline formulations.

### Study 2. Pick-up of formulations by adult mustard beetles following contact with 2 day old deposits

Droplets (48h) of the EC, WG, TB and MM formulations in distilled water (1%w/v of active ingredient) were placed on glass slides and aged for 48 hours. Adult mustard beetles *(Phaedon cochleariae* Fab.) each held dorsally by a suction pooter were placed in contact with the center of the deposit for 2 seconds and immediately immersed in ANALAR acetone (1ml) to remove transferred insecticide. The beetles were removed and the solutions analyzed for α-cypermethrin using MS/GC (Hewlett Packard GCD in single ion monitoring mode).

A high level of transfer of α-cypermethrin was achieved with the EC and WG, but that observed for the TB and MM was relatively small. Pick-up from the droplets (see Table 1 below) was compared with the microscope observations of the deposits (FIGURES 1-4). The EC and WG which remain wet 2 days after application appear to aid transfer of α-cypermethrin, whereas the TB and MM, which form dry, crystalline deposits, are less readily available. The presence of surfactant in both the EC and WG formulations may also have contributed to better pick-up by the insects.

**Table 1**

| Quantities (total ion equivalents) of α-cypermethrin picked up by mustard beetles from 2 day old deposits prepared from wet and dry formulations. | | | | |
|---|---|---|---|---|
| Formulation type | | | | |
| | EC | WG | MM | TB |
| | | | | |
| Mean | 4700 | 4425 | 47 | 77 |
| SD | 3711 | 3014 | 25 | 48 |
| SE | 830 | 674 | 8 | 15 |
| n | 20 | 20 | 10 | 10 |

### Study 3. Re-deposition studies

The experiment described in Study 2 was repeated, but on this occasion the contaminated beetles were held for six successive 2 second contacts with clean glass surfaces (1ml sample tubes) in order to determine the pattern of re-deposition of transferred insecticide. The surfaces were washed in aliquots (2x 0.3ml) of ANALAR acetone and the solutions once again analyzed by MS/GC.

Although large amounts of α-cypermethrin were picked up with the EC formulation, significant amounts were redeposited at each of the 5 contacts (FIGURE 5). This suggests that the net quantity of insecticide retained on the insect surface will progressively diminish following contact with deposits formed from EC formulations, minimizing the efficacy of dose transfer. Re-deposition, however, was not observed with the WG formulation. For both the MM and TB, levels of pick up and re-deposition of α-cypermethrin were below the detection limits of the method used. The beetles did, however, pick-up a KD50 with both the MM and TB (FIGURE 6), indicating that toxicologically significant transfer had occurred. The results suggest that re-deposition which is high for liquid deposits (compare the EC with the WG, Study 1) is less significant for dry formulations.

### Study 4. Response of mustard beetles following contact with 2 hour old deposits

The knockdown response of mustard beetles following contact with the droplets of formulated α-cypermethrin (FIGURE 6) were similar for the EC and WG, reaching 100% within minutes. With both MM and TB formulations, the onset of knockdown was slower and only 60% of the beetles were affected even after an elapsed time of 400 minutes. These responses are consistent with the high transfer found with the EC and WG and the low transfer observed for the other two formulations.

The experiment described in Study 1 was again repeated, but this time 10 beetles were contacted per deposit before being confined in Petri dishes lined with filter paper. Counts of knockdown were recorded at frequent intervals in order to follow the onset of poisoning.

### Study 5. In vivo pharmacokinetic studies of a topically applied median lethal dose

All four formulations (EC, WG, TB and MM applied as 1% a.i. w/v) plus acetone and aqueous suspensions of α-cypermethrin (1% a.i. w/v) were topically applied (0.5µl) to the ventral surface of adult mustard beetles, *Phaedon cochleariae* Fab. The aqueous suspension was prepared by dissolving technical a.i. in acetone (1ml) followed by addition of distilled water to give a final volume of 10 ml. Treated beetles were held ventral side up on adhesive tape until the deposit had dried (5 minutes). This prevented re-deposition of the insecticide. For the longer exposure times the beetles were removed from the adhesive and contained in a filter paper lined Petri dish and fed. Knockdown was assessed at various times after application. Pharmacokinetic profiles were then obtained for external and internal extracts. Surface washes (7.5ml) and internal extracts (2ml), undertaken immediately after knockdown had been recorded, were prepared using acetone as extraction solvent. For the internal extracts, the residue prepared by grinding washed beetles was treated with liquid nitrogen to remove tissue water during boiling. The extracts were evaporated to dryness in the dark and acetone (2ml) added before GC analysis.
The mass of α-cypermethrin on the external surface fell steadily at similar rates for all four formulations over the 96 hour study period . Although there was a large amount of variation in the mass of material recovered from the underlying (internal) tissues, internal accumulation was broadly similar for each formulation. The active ingredient was detected internally at very short elapsed times, with the WG and EC formulations giving maximum internal recoveries at immediately after (1 m) application. Thereafter, levels were similar for all formulation types. The rate of increase in internal levels (similar for all formulations) was considerably less than the rate of loss from the external surface. This latter observation suggests that material is being lost from the system by mechanisms such as vomiting or may be reaching internal binding sites from which the pyrethroid is irrecoverable by simple cold solvent extraction. Interestingly, the knockdown of beetles used in the pharmacokinetics experiments were similar for all formulations, reflecting the similar rates of penetration and internal accumulation.

### Example 2

### Study to determine the Impact of Formulation on Residuality of FASTAC α-Cypermethrin against Adult Mustard Beetles (Phaedon cochleariae) on oilseed rape.

The FASTAC DRY α-cypermethrin formulation is prepared as follows:
**Step 1** A homogenous mixture of alphacypermethrin 40% technical concentrate is prepared in a high shear powder blender to the following formula:

| Formula 1 α-cypermethrin 400g/kg TK | | |
|---|---|---|
| | Quantity | |
| | g/kg | % w/w |
| α-cypermethrin technical | 400 | 40 |
| Potassium hydrogen sulphate | 4.8 | 0.48 |
| Agimer 30 | to 1kg | to 100% |

**Step 2** A hot melt extruder is continuously gravity fed with the powder mix from Step 1. The mix is concurrently heated and mixed to a molten state, the extruded product is cooled on a chilled stainless steel belt and crushed to flakes (kibbled). Water (present in PVP feedstock) is removed from the extruder to a vacuum water collection unit.
**Step 3** The flake from step 2 is fed to a hammer mill to produce a granular material, this may be stored or used immediately for tablet production.
**Step 4** Tablet excipients (inclusive of the lubricant) and the α-cypermetrin 40% technical concentrate from stage 3 are deagglomerated/sifted prior to mixing in a low shear diffusive blender. The tablet powderbase is prepared according to the following formula:

| Formula 2 α-cypemethrin 150g/kg Powderbase | | |
|---|---|---|
| | Quantity | |
| | g/kg | %w/w |
| α-cypermethrin 400 g/kg TK | 375 | 37.5 |
| Potassium hydrogen carbonate | 290 | 29 |
| Citric acid anhydrous fine granular | 210 | 21 |
| Avicel PH 103 PVP copolymer | 50 | 5 |
| Avicel PH 105 PVP copolymer | 50 | 5 |
| Empicol LZ | 7 | 0.7 |
| Neosyl TS | 6 | 0.6 |
| Sorbitol P300 | to 1kg | to 100% |

**Step 5** The α-cypermethrin 15% powder blend from step 4 is fed to a hammer mill to produce a fine powder.
**Step 6** The milled powder from stage 5 is tabletted to produce a 4.25 mm tablet. The tablets, once dedusted, are final products ready for packing.

This study was conducted by the University of Portsmouth to evaluate the residual performance of various formulations of α-cypermethrin using a model chewing insect pes, *Phaedon cochleariae,* and oil seed rape plants which were grown, sprayed and held outside. The residuality of a formulation of α-cypermethrin containing PVP (denoted herein as FASTAC DRY) was compared with EC and OESC α-cypermethrin formulations to determine the impact of formulation. In addition, KARATE DF lambda-cyhalothrin, SUMI-ALPHA esfenvalerate, MAVRICK τ-fluvalmate, and DECIS deltamethrin were included for comparison as commercial standards.

All of the other formulations tested provided significantly less residual performance than FASTAC DRY α-cypermethrin at the full field application rate (FIGURE 7). The other commercial standards (FIGURE 8) provided significantly less residual performance than FASTRY DRY α-cypermethrin applied at the full rate dose (10 g.ai ha⁻¹). In addition, the consistency between the replicates of these commercial formulations was poor by comparison with FASTAC DRY α-cypermethrin. The superior consistency of response with FASTAC DRY α-cypermethrin indicates greater reliability in the field, especially in situations where re-invasion occurs several days after treatment.

### Materials and Methods

Six products (FASTAC DRY α-cypermethrin, FASTAC OESC α-cypermethrin, KARATE DF lambda-cyhalothrin (marketed by Zeneca), SUMI ALPHA esfenvalerate, (marketed by Sumitomo), MAVRICK τ-fluvalinate (marketed by Novartis), and DECIS deltamethrin (marketed by AgrEvo) were compared with a standard FASTAC α-cypermethrin EC formulation. All samples (Table 1) were provided by Product Research and Development Laboratory, Cyanamid Agriculture Limited, Gosport, UK.

**Table 1.**

| **Products used** | | | | |
|---|---|---|---|---|
| Formulation | Type of Formulation | Active Ingredient (ai) | Concentration of ai | Reference No. |
| FASTAC DRY | Effervescent flowable solid | α-cypermethrin | 150 g kg⁻¹ | RLF12152 |
| FASTAC OESC | Oil enhanced suspension concentrate | α-cypermethrin | 100 g l⁻¹ | CF06677 |
| FASTAC EC | Emulsifiable concentrate | α-cypermethrin | 100 g l⁻¹ | CF05898 |
| KARATE DF | Wettable granule | lambda-cyhalothrin | 25 g kg⁻¹ | Commercial Sample |
| SUMI ALPHA | Emulsifiable concentrate | esfenvalerate | 25 g kg⁻¹ | Commercial Sample |
| MAVRICK | Emulsifiable concentrate | τ-fluvalinate | 240 g l⁻¹ | Commercial Sample |
| DECIS | Emulsifiable concentrate | deltamethrin | 28 g l⁻¹ | Commercial Sample |

Oil seed rape plants, grown outdoors, were sprayed at both full and half the recommended field German rates for beetle control on oil seed rape in Germany. Treated leaves were detached from plants and placed in Petri dishes at a range of times following treatment. The detached leaves were infested with adult mustard beetles *(Phaedon cochleariae)* and held under controlled environmental conditions. The trial was continued until the response to insecticide treatment was indistinguishable from that of untreated controls.

An outdoor, hard standing area in a sheltered, protected location was used. The plot, sandwiched between two University of Portsmouth glasshouses, was exposed to sunlight and precipitation. After spraying, the plot was covered with pigeon netting to prevent damage by birds.

Oil seed rape (variety Mars) were sown in 7cm diameter pots in a soil-based compost. These were germinated under glasshouse conditions then grown outdoors. By the time they were sprayed, plants were at approximately the ten (10) leaf stage. Growing tips were removed before spraying so as to expose fully expanded leaves and to ensure that only treated leaves would be selected for bioassay later in the study.

Seedlings were sprayed in blocks under conditions that would be representative of field conditions. Applications were made outdoors in warm, dry conditions with only light wind. For each treatment, plants were arranged in a double row in the center of a 5m track. Spraying was effected using a hand lance fitted with a single "Evenspray" flat fan nozzle (Lurmark 04580; FE/1.63/0) operating at a nominal pressure of 4.0 bar to simulate a typical tractor-mounted hydraulic sprayer. All applications were made at a volume rate of 300 l ha⁻¹ using the following variables: walking speed of 1.0m s⁻¹, nozzle height of 0.5m (giving a swathe width of 1.0 m), and a nozzle flow rate of 1.80 a min⁻¹. Check calibrations of walking speed and system pressure were made immediately prior to each application.

The application rate was calculated from the speed of passage of the operator, the swathe width and the flow rate. Measurement of the nozzle flow rate when operating with clean tap water showed that a flow rate of 1.8 l min⁻¹ was achieved with a pressure setting of 3.5 bar. A Lurmark 04E80 nozzle was selected based on an initial laboratory assessment of the methods for applying the chemical and the chosen settings of walking speed (1.0 m/s), nozzle height (0.5 m) and flow rate (1.8 l/min at a pressure of 4.0 bar) were NOMINAL based on published date (Anon, 1993). The pressure of 3.5 bar was determined from a system calibration using the same procedure as that employed in the current application work and therefore took account of the actual nozzle characteristics used, any discrepency in pressure measurement and the characteristics of the delivery line.
Checks were effected using pre-weighed 150 mm diameter filter paper targets held at canopy height in the spray swath. These were sprayed with clean tap water and weighed immediately. The desired application rate of 300 l ha⁻¹ represented a weight of 0.53 g of water on each filter paper. The measured calibration gave a mean deposit level that was with + 5.0% of this target value.

The recommended application rates for beetle control on oil seed rape in Germany were used for FASTAC and commercial standards (See Table 3 below)

**Table 3.**

| **Application Rates** | |
|---|---|
| Product | Field Application Rate (g ai ha⁻¹) |
| FASTAC EC α-cypermethrin | 10 |
| FASTAC DRY α-cypermethrin | 10 |
| FASTAC OESC α-cypermethrin | 10 |
| KARATE lambda-cyhalothrin | 7.5 |
| SUMI-ALPHA esfenvalerate | 12.5 |
| DECIS deltamethrin | 15 |
| MAVRICK τ-fluvalinate | 48 |

Adult mustard beetles *(Phaedon cochleariae)* from cultures at University of Portsmouth, reared in a 12hours light-12hours dark regime on Chinese cabbage leaves were used in the trials.

### Bioassay

Sprayed leaves were detached at 4 hours post spraying, and then at 1, 3, 7, 10, 14, 21 and 29 days later. A 5cm. disc was cut from each treated leaf and place in a 5cm Petri dish lined with filter paper so that only the abaxial leaf surface was exposed. The confined leaves were each infested with 10 adult mustard beetles and mortality assessed after 24, 48 and 72 hours exposure. Insects were classed as either knocked down or dead at 72 hours when endpoint mortality approached. The counts of knockdown and mortality were pooled and categorized as dead. Experience has demonstrated that, with α-cypermethrin, once knocked down, recovery does not occur.

### Environmental Conditions

Daily weather records (precipitation, hours of sunshine, maximum and minimum temperatures) were obtained for the period of the trial from a local weather station 8 kilometers from the trial site. There was no measurable precipitation until day ten of the trial. This was followed by several days of heavy rainfall coupled with strong winds. Although the trial was conducted late in the year, temperatures during the trial were functionally equivalent to spring conditions in north Europe.

### Results

Results are presented in full in Table 4 and the main effects are summarized in Figures 7 to 8. FASTAC DRY α-cypermethrin (full dose) was the most persistent insecticidal treatment investigated in this study (Table 4, Figures 7 -8). When insects showed symptoms of poisoning, there was little evidence of feeding on treated leaves. With the full field application rate, complete mortality was maintained for 7 days and remained above 95% control ten days after application. Moreover, the level of control obtained with this treatment was consistent, varying little between replicates. As a result, the curve describing loss of residuality was well defined. Similar consistency was obtained with FASTAC DRY applied at half the dose, although 100% control broke down after only 1 day and residulality was generally lower.

### Discussion and Conclusions

FASTAC DRY α-cypermethrin provided greater residuality and consistency of performance than FASTAC α-cypermethrin EC and the commercial standards. Since the insects were not directly exposed, the bioassay provided a measure of dose transfer from treated leaf surface to insect surface, and hence of bioavailability. These observations are consistent with earlier studies (Ford M.G., et al. Impact of formulation properties on insecticidal efficacy. BCBC Conference Proceedings - Pests and Diseases, 3, pp. 801-806), which indicated the importance of dose transfer for bioavailability and high insecticidal activity of spray deposits.

As FASTAC α-cypermethrin is primarily contact active, residuality depends on two main factors; the amount of active ingredient remaining in the deposit, and its availability for transfer from substrate to insect body surface. The extension of the period of effective control observed with FASTAC DRY α-cypermethrin formulation technology must be due to prolonged and enhanced dose transfer.

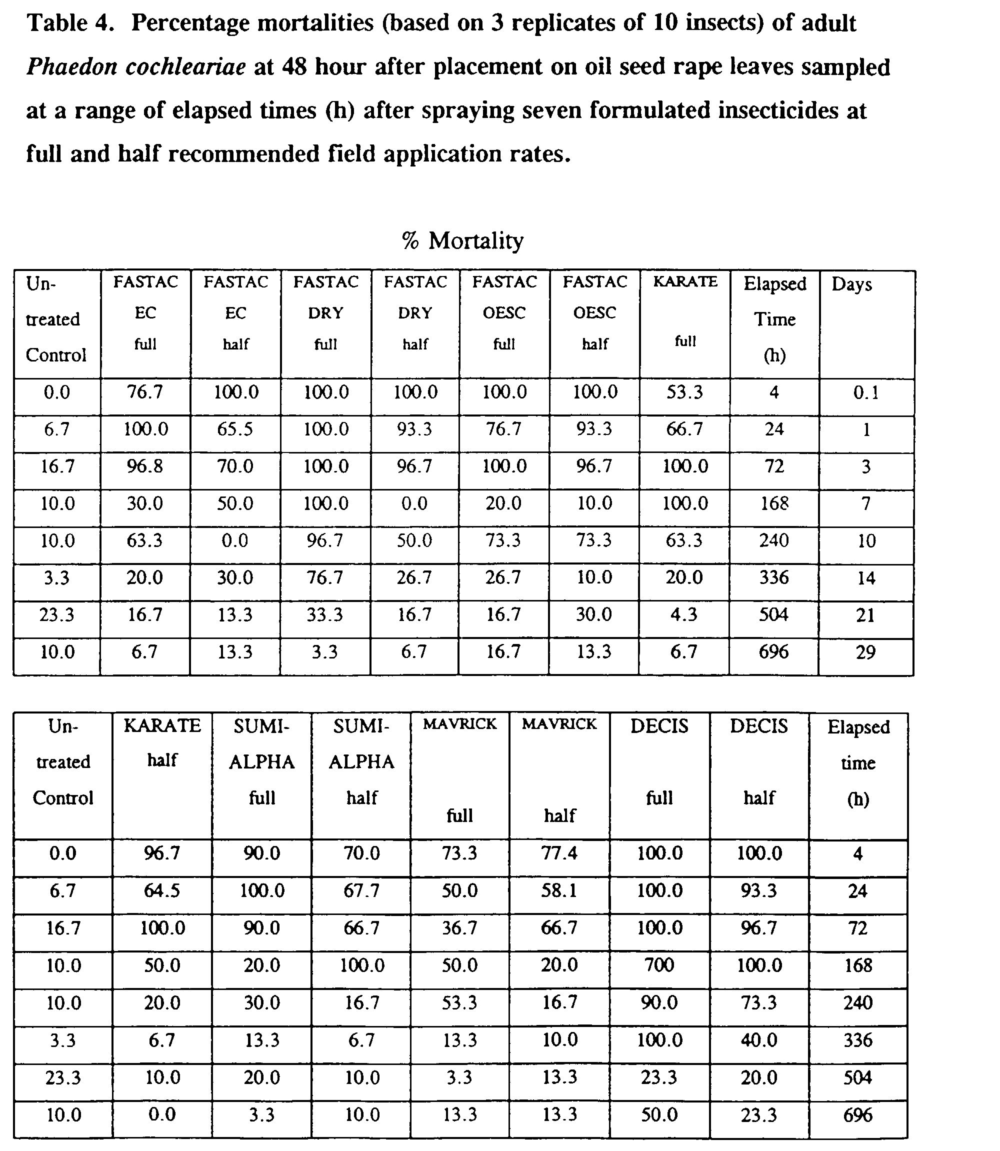

FASTAC DRY α-cypermethrin was consistent, unlike that provided by the other commercial standards. This observation would tend to indicate that superior control reliability should be possible with FASTAC DRY α-cypermethrin due to its prolonged bioavailability. Critically 90 to 95% was achieved for significantly longer ( > 10 days) by FASTAC DRY α-cypermethrin than by any of the products evaluated. It is therefore concluded that FASTAC DRY α-cypermethrin should provide greater pest control in situations where re-invasion can occur following application.

### Example 3

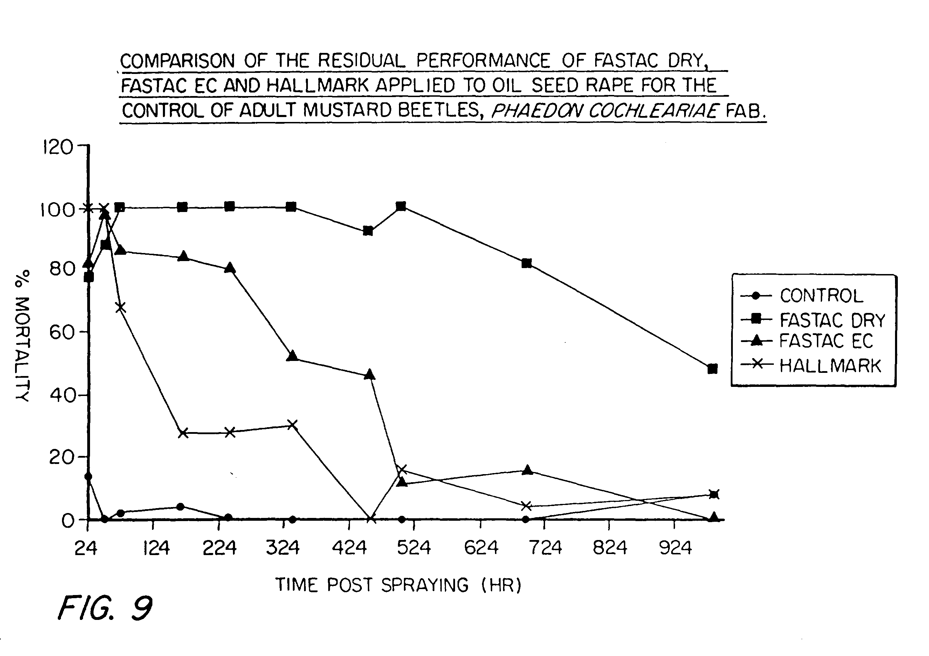

In a further study, the FASTAC DRY α-cypermethrin formulation was compared to a FASTAC α-cypermethrin EC formulation and HALLMARK-lambda halothrin *vis a vis Phaedon* on oil seed rape. Four plots of oil seed rape approximately 12m x 8m were sprayed by Ibworth trials station personnel at a rate of 10 gai/ha. Five leaves per treatment were sampled at 1,2,3,7,10,14,19,21, 29 and 41 days post spraying. The leaves were cut into disks, placed in 5 cm Petri dishes and infested with 10 adult *Phaedon cochleariae.* Insect mortality was then assessed at 24, 48 and 72 hours post infestation. Following an initial response of less than 100% mortality at the first two assessments, FASTAC DRY α-cypermethrin provides 100% control for approximately 14 days and a control level of at least 82% for 29 days. The apparent reduction in performance at the first two sampling times was attributed to an imperfect application, made under realistic field conditions, resulting in an incomplete exposure to several replicates. By comparison, the FASTAC α-cypermethrin EC formulation provides > 80% for 10 days before declining rapidly and the HALLMARK lambda-halothrin formulation declines rapidly after 48 hours. FIGURE 9 is a graph showing the results.

This invention may be embodied in other forms or carried out in other ways without departing from the spirit or essential characteristics thereof. The present disclosure is therefore to be considered as in all respects illustrative and not restrictive, the scope of the invention being indicated by the appended Claims, and all changes which come within the meaning and range of equivalency are intended to be embraced therein.

## Claims

1. A method of forming a coherent, solid deposit of a pesticidal agent upon a target which comprises :
a) formulating the agent into a flowable, dry composition which comprises 10-75% by weight of a polyvinylpyrrolidone polymer or copolymer;
b) mixing said composition with a suitable solvent for application to a target; and
c) applying the fomulation to the target, whereby a coherent solid deposit of the pesticidal agent is formed upon the target, thereby increasing the residual activity and the bioavailability of the pesticidal agent.

2. The method according to Claim 1 wherein the polyvinyl pyrrolidone polymer or copolymer has an average molecular weight in the range of from 10,000 to 400,000.

3. A method according to Claim 1, wherein said pesticidal agent is a pyrethroid insecticide of general formula: 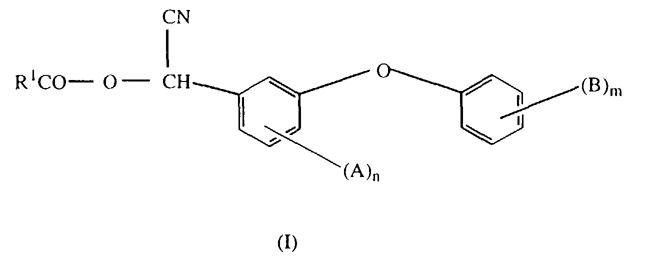 where A and B independently represent a halogen atom or a methyl group; n is 0, 1 or 2, m is 0, 1 or 2; and R¹ represents a group of general formula: 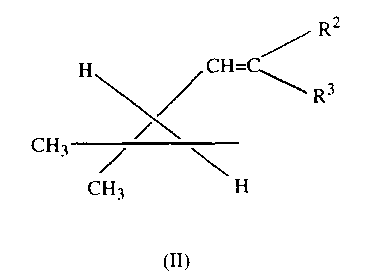 where R² and R³ independently represent a hydrogen or halogen atom, or an optionally substituted C₁₋₄ alkyl group; or R¹ represents a group of general formula: 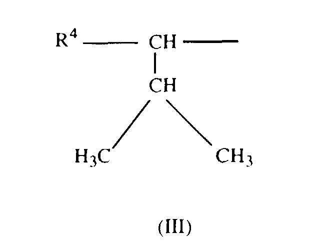 where R⁴ represents a phenyl group optionally substituted by one or more substituents independently selected from halogen atoms, or C₁₋₄ alkyl, C₁₋₄ alkylthio, C₁₋₄ alkoxy, nitro and methylenedioxy groups.

4. The method according to Claim 3 wherein said pyrethroid insecticide is selected from the group consisting of cypermethrin, α-cypermethrin, deltamethrin, cyfluthrin and esfenvalerate.

5. The method according to Claim 1 wherein said pesticidal agent is an insecticide selected from the group consisting of chlorfenapyr, flufenoxuron, and '191.

6. A method for controlling pests which comprises administration of a pesticidal agent to a target and forming a coherent, solid deposit of a pesticidal agent upon said target which comprises :
a) formulating said agent into a flowable, dry composition which comprises 10-75% by weight of a polyvinylpyrrolidone polymer or copolymer ;
b)mixing said composition with a suitable solvent for application to a target; and applying the formulation to the target, whereby a coherent solid deposit of the pesticidal agent is formed upon the target, thereby increasing the residual activity and the bioavailability of the pesticidal agent.

7. The method according to Claim 6 wherein the pesticidal agent is selected from the group consisting of cypermethrin, α-cypermethrin, deltamethrin, cyfluthrin, esfenvalerate, chlorfenapyr, flufenoxuron and isofluoroene.

8. The method according to any of the preceding claims wherein said pest is a bettle.

9. The use of a polyvinylpyrrolidone polymer or copolymer for forming a coherent, solid deposit of a pesticidal agent upon a target thereby increasing the residual activity and the bioavailability of the pesticidal agent, which comprises :
a) formulating the agent into a flowable, dry composition which comprises 10-75% by weight of ;
b) mixing said composition with a suitable solvent for application to a target; and
c) applying the fomulation to the target, whereby a coherent solid deposit of the pesticidal agent is formed upon the target.

10. The use according to Claim 9 wherein the polyvinyl pyrrolidone polymer or copolymer has an average molecular weight in the range of from 10,000 to 400,000.

11. A use according to Claim 9, wherein said pesticidal agent is a pyrethroid insecticide of general formula: 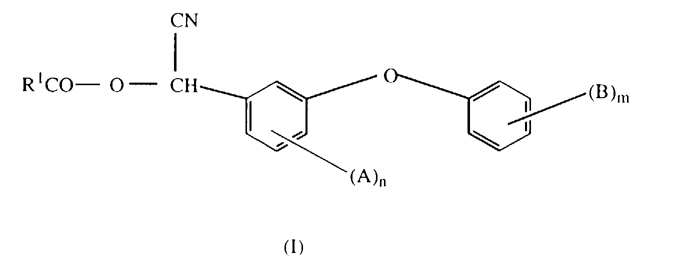 where A and B independently represent a halogen atom or a methyl group; n is 0, 1 or 2, m is 0, 1 or 2; and R¹ represents a group of general formula: 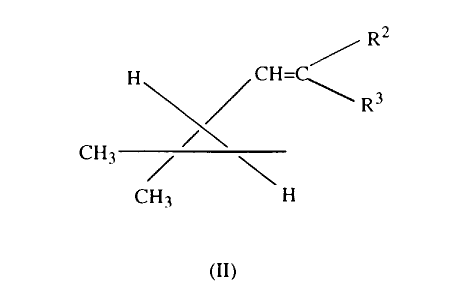 where R² and R³ independently represent a hydrogen or halogen atom, or an optionally substituted C₁₋₄ alkyl group; or R¹ represents a group of general formula: 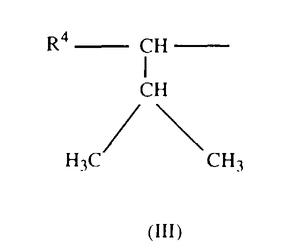 where R⁴ represents a phenyl group optionally substituted by one or more substituents independently selected from halogen atoms, or C₁₋₄ alkyl, C₁₋₄ alkylthio, C₁₋₄ alkoxy, nitro and methylenedioxy groups.

12. The use according to Claim 11 wherein said pyrethroid insecticide is selected from the group consisting of cypermethrin, α-cypermethrin, deltamethrin, cyfluthrin and esfenvalerate.

13. The use according to Claim 9 wherein said pesticidal agent is an insecticide selected from the group consisting of chlorfenapyr, flufenoxuron, and '191.

14. The use of a composition as defined in any of claims 9 to 13 for controlling pests which comprises administration of a pesticidal agent to a target and forming a coherent, solid deposit of a pesticidal agent upon said target which comprises :
a) formulating said agent into a flowable, dry composition which comprises 10-75% by weight of a polyvinylpyrrolidone polymer or copolymer ;
b) mixing said composition with a suitable solvent for application to a target; and applying the formulation to the target, whereby a coherent solid deposit of the pesticidal agent is formed upon the target, thereby increasing the residual activity and the bioavailability of the pesticidal agent.

15. The use according to Claim 14 wherein the pesticidal agent is selected from the group consisting of cypermethrin, α-cypermethrin, deltamethrin, cyfluthrin, esfenvalerate, chlorfenapyr, flufenoxuron and isofluoroene.

16. The use according to any of Claims 9-15 wherein said pest is a bettle.
